# EUROPEAN PATENT SPECIFICATION

(11) **EP 3 990 295 B1**
(45) Date of publication and mention of the grant of the patent: **04.10.2023**
(21) Application number: 20736797.0
(22) Date of filing: 26.06.2020
(51) Int. Cl.: B60C 11/00, B60C 11/24

(54) **A NOISE IMPROVING TREAD**
GERÄUSCHVERBESSERNDE LAUFFLÄCHE
BANDE DE ROULEMENT RÉDUISANT LE BRUIT

(30) Priority: 26.06.2019 WO PCT/JP2019/025292
(43) Date of publication of application: 04.05.2022
(73) Proprietor: COMPAGNIE GENERALE DES ETABLISSEMENTS MICHELIN, 63000 Clermont-Ferrand (FR)
(72) Inventor: PROU Joris, Tokyo 163-1073 (JP); BABAUD Jacques, Tokyo 163-1073 (JP)
(74) Representative: Desbordes, Guillaume
(86) International application number: PCT/JP2020/025174
(87) International publication number: WO 2020/262596

(56) References cited:
- EP-A1- 2 522 530
- WO-A1-2014/005929

## Description

### [Technical Field]

The present invention relates to a tread for a tire, in particular to a tread for a tire provides improvement on noise performance.

### [Background Art]

In recent years, premiumisation and quality improvement of vehicles lead, from the view point of occupant's comfort and environmental considerations in particular toward an electrification of a vehicle, desire to various noise reductions.

It is known that the noise from the tires includes various components, that is a component from external noise and a component from internal noise. The internal noise includes a vibration due to excitation of a tread portion during rolling, the vibration is transmitted to a wheel rim, an axis, a suspension and a body of the vehicle then heard in an interior of the vehicle as noise.

In order to improve such noise, it is known that reduction of the vibration due to excitation of the tread portion by placing relatively soft rubber in the tread is effective. Various solutions have been proposed to improve such noise.

EP0827845 A1 discloses a tire having a reduced rigidity rubber component interposed between a tread layer and a belt reinforcement, the reduced rigidity rubber component having a hardness and a geometry such that the maximum longitudinal and lateral contact stresses on the tread layer are reduced relative to a tire without such reduced rigidity rubber component.

WO2012119844 A1 discloses a pneumatic vehicle tire having a tread which is comprised in the radial direction of two layers consisting of different rubber compounds, a tread cap and a tread base, and the tread base viewed in the axial direction has at least directed radially outward, a central segment and two lateral segments, the two lateral segments consist of a rubber compound that has a lower dynamic elastic modulus E' at 55 °C and a lower hysteresis than the central segment of the tread base for a lower rolling resistance without worsening the handling behavior.

JP2000198319 A discloses a pneumatic tire having a tread portion in a two-layered structure of a cap tread layer and an under tread layer, the under tread layer is constituted by a center region and a shoulder region extended continuously from the center region to an outer, the regions comprising rubber composition different from each other, the center region is arranged with a rubber layer where JIS-A hardness is from 65 to 80, the shoulder region is arranged with a rubber layer where JIS-A hardness is from 50 to 70.

JP2009286317 A discloses a tire having two layers tread, a base rubber and a cap rubber, the base rubber is divided into a center base rubber segment located at the widthwise center and shoulder base rubber segments located on both sides outside the center base rubber segment in the width direction, a dynamic modulus of the elasticity (E') of the center base rubber segment is 8.0 to 18.0 at 30°C, the dynamic modulus of the elasticity (E') of the shoulder base rubber segments is 3.0 to 7.0 at 30°C.

WO2014005929 A1 discloses a tire with a radial carcass reinforcement, having a crown reinforcement, itself capped radially by a tread connected to two beads by two sidewalls, the tread having at least two layers of blended elastomeric compounds that are radially superposed and have a voids ratio that is lower in the central part than at the axially outer parts. A first layer of blended elastomeric compounds of the tread is made up of a first blended elastomeric compound forming a part extending at least into the region of the equatorial plane and of at least two axially outer parts formed of a second blended elastomeric compound, the first blended elastomeric compound having a macro dispersion Z-value higher than 65 and a maximum tan(6) value, denoted tan(δ)max, lower than 0.150, and the second blended elastomeric compound having a maximum tan(6) value, denoted tan(δ)max, lower than 0.130.

EP2522530 A1 discloses a tire having a rubber tread comprised of cap/base construction where the tread outer cap rubber layer contains the running surface of the tread and the tread base rubber layer underlies the tread cap layer wherein the base layer provides a transition zone between the tread cap layer and the remainder of the tire carcass and is not intended to be ground-contacting. The tread base rubber layer is comprised of three distinct zones, namely a circumferential annular central rubber zone positioned between two lateral annular rubber zones. The rubber tread cap layer and zoned rubber tread base layer are co-extruded together to form an integral tread rubber composite.

### [Citation List]

### [Patent Literature]

[PTL 1]
   EP0827845 A1
[PTL 2]
   WO2012119844 A1
[PTL 3]
   JP2000198319 A
[PTL 4]
   JP2009286317 A
[PTL 5]
   WO2014005929 A1
[PTL 6]
   EP2522530 A1

However with the solutions disclosed in these documents, improvement on noise performance is not satisfactory. Also at the same time, degradation of handling performance is not an acceptable level. Thus there is a desire to further improvement of noise performance while maintaining reasonable level on handling performance.

Therefore, there is a need for a tread for a tire which provides improvement on noise performance while maintaining reasonable level on handling performance.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

A "contact patch" is a footprint of a tire mounted onto its standard rim as identified in tire standards such as ETRTO, JATMA or TRA, and inflated at its nominal pressure and under its nominal load. A "width TW" of a contact face is a maximum contact width of the contact patch along with an axis of rotation of the tire.

A "shear storage modulus G'" is a shear storage modulus measured at 23°C, 10Hz and 10% of strain.

It is thus an object of the invention to provide a tread for a tire which provides improvement on noise performance while maintaining reasonable level on handling performance.

### [Summary of Invention]

The present invention provides a tread for a tire having a contact face of a width TW intended to come into contact with ground during rolling, the tread being provided with at least one groove of a depth D provided with a wear indicating mean and extending generally in circumferential orientation and opening to the contact face, the tread comprising a center region and a pair of shoulder regions being positioned on two axial sides of the center region, the pair of shoulder regions each comprising a shoulder rubber layer of a thickness ts made of a shoulder rubber composition different from a rubber composition constituting the tread, a shear storage modulus G' of the rubber composition constituting the tread measured at 23°C, 10Hz and 10% of strain being different from a shear storage modulus G' of the shoulder rubber composition constituting the shoulder rubber layer measured at 23°C, 10Hz and 10% of strain, the shear storage modulus G' of the shoulder rubber composition constituting the shoulder rubber layer measured at 23°C, 10Hz and 10% of strain is less than or equal to 1.0 MPa.

This arrangement provides an improvement on noise performance while maintaining reasonable level on handling performance.

Since the pair of shoulder regions each comprising a shoulder rubber layer, and the shear storage modulus G' of the shoulder rubber composition constituting the shoulder rubber layer measured at 23°C, 10Hz and 10% of strain is less than or equal to 1.0 MPa, the shoulder rubber layer can effectively reduce excitation of the tread during rolling. Therefore it is possible to improve noise performance.

If the shear storage modulus G' of the shoulder rubber composition constituting the shoulder rubber layer measured at 23°C, 10Hz and 10% of strain is more than 1.0 MPa, there is a risk that an improvement on noise performance would be insufficient. By setting the shear storage modulus G' of the shoulder rubber composition constituting the shoulder rubber layer measured at 23°C, 10Hz and 10% of strain less than or equal to 1.0 MPa, the shoulder rubber layer can effectively reduce excitation of the tread during rolling.

This shear storage modulus G' of the shoulder rubber composition constituting the shoulder rubber layer measured at 23°C, 10Hz and 10% of strain is preferably from 0.1 to 1.0 MPa, more preferable from 0.1 to 0.7 MPa.

Since the shoulder rubber layer is comprised in the pair of shoulder regions and not the center region, degradation on handling performance is limited as the center region has a dominant impact on handling performance due to longer contact length compared to shoulder regions. Therefore it is possible to maintain reasonable level on handling performance.

In another preferred embodiment, the shoulder rubber layer is invisible on the contact face when the tread being brand new.

According to this arrangement, it is possible to exhibit a good initial performance not only noise and handling but also other performances, as a contact patch is occupied by the rubber composition constituting the tread which is designed to realize balanced performance.

In another preferred embodiment, the shoulder rubber layer is provided radially below a level of 50% of the depth D of the at least one groove.

According to this arrangement, it is possible to keep the good initial performance not only noise and handling but also other performances longer, as the contact patch is continue occupied by the rubber composition constituting the tread which is designed to realize balanced performance at least until middle of wear life.

In another preferred embodiment, the center region comprises a center rubber layer of a thickness tf made of a center rubber composition different from both the shoulder rubber composition and the rubber composition constituting the tread, and a shear storage modulus G' of the center rubber composition constituting the center rubber layer measured at 23°C, 10Hz and 10% of strain is higher than the shear storage modulus G' of the rubber composition constituting the tread measured at 23°C, 10Hz and 10% of strain.

According to this arrangement, it is possible to improve handling performance, as the center rubber layer made of the center rubber composition having higher shear storage modulus G' than the shear storage modulus G' of the rubber composition constituting the tread deforms less and the tread in the center region other than the center rubber layer need to deform more at a given slip angle thus generates stronger lateral force.

In another preferred embodiment, the center rubber layer is positioned radially inward of the center region.

According to this arrangement, it is possible to improve handling performance efficiently, as the center rubber layer which has high shear storage modulus is placed closer to a component (a ply) of the tire generating dominantly lateral force.

In another preferred embodiment, the thickness tf of the center rubber layer is thinner than the thickness ts of the shoulder rubber layer.

According to this arrangement, it is possible to improve both noise and handling performances simultaneously and efficiently, as thicker shoulder rubber layer thickness ensures reduction of tread excitation, and thinner center rubber layer thickness ensures generation of higher lateral force.

If the thickness tf of the center rubber layer is thicker than the thickness ts of the shoulder rubber layer, there is a risk that reduction of tread excitation by the shoulder rubber layer becomes insufficient due to relatively smaller volume of the shoulder rubber layer compare with the center rubber layer, thus improvement on noise performance becomes insufficient. By setting the thickness tf of the center rubber layer thinner than the thickness ts of the shoulder rubber layer, it is possible to improve both noise and handling performance simultaneously and efficiently.

In another preferred embodiment, the center rubber layer is provided radially below a level of the wear indicating mean.

If the center rubber layer is provided radially above the level of the wear indicating mean, there is a risk that improvement on handling performance becomes insufficient, as too much volume of the center rubber layer may make flattening of the tire difficult which leads contact patch length shorter resulting generating less lateral force. By setting the center rubber layer provided radially below the level of the wear indicating mean, it is possible to improve handling performance.

In another preferred embodiment, the shear storage modulus G' of the center rubber composition constituting the center rubber layer measured at 23°C, 10Hz and 10% of strain is from 2 to 10 times of the shear storage modulus G' of the rubber composition constituting the tread measured at 23°C, 10Hz and 10% of strain.

If the shear storage modulus G' of the center rubber composition constituting the center rubber layer measured at 23°C, 10Hz and 10% of strain is less than 2 times of the shear storage modulus G' of the rubber composition constituting the tread, there is a risk that improvement on handling performance becomes insufficient due to relatively insufficient modulus of the center rubber composition. If the shear storage modulus G' of the center rubber composition constituting the center rubber layer measured at 23°C, 10Hz and 10% of strain is more than 10 times of the shear storage modulus G' of the rubber composition constituting the tread, there is a risk that improvement on handling performance becomes insufficient either as too hard center rubber composition may make flattening of the tire difficult which leads contact patch length shorter resulting generating less lateral force. By setting the shear storage modulus G' of the center rubber composition constituting the center rubber layer measured at 23°C, 10Hz and 10% of strain from 2 to 10 times of the shear storage modulus G' of the rubber composition constituting the tread, it is possible to improve handling performance.

In another preferred embodiment, the shear storage modulus G' of the rubber composition constituting the tread other than the center rubber layer or the shoulder rubber layer measured at 23°C, 10Hz and 10% of strain is less than or equal to 6.0 MPa.

If the shear storage modulus G' of the rubber composition constituting the tread other than the center rubber layer or the shoulder rubber layer is more than 6.0 MPa, there is a risk that improvement on noise performance becomes insufficient, as the tread itself becomes too hard even provided with the shoulder rubber layer. By setting the shear storage modulus G' of the rubber composition constituting the tread other than the center rubber layer or the shoulder rubber layer measured at 23°C, 10Hz and 10% of strain less than or equal to 6.0 MPa, it is possible to improve noise performance while improving or at least maintaining reasonable level on handling performance.

The shear storage modulus G' of the rubber composition constituting the tread other than the center rubber layer or the shoulder rubber layer is preferably less than or equal to 4.0 MPa, more preferably less than or equal to 3.0 MPa.

### [Advantageous Effects of Invention]

According to the arrangements described above, it is possible to provide a tread for a tire which provides improvement on noise performance while maintaining reasonable level on handling performance.

### [Brief Description of Drawings]

Other advantages of the invention arise from the description made hereafter in reference to the annexed drawings which show, as nonrestrictive examples, the embodiment of the invention

In these drawings:
[Fig. 1]

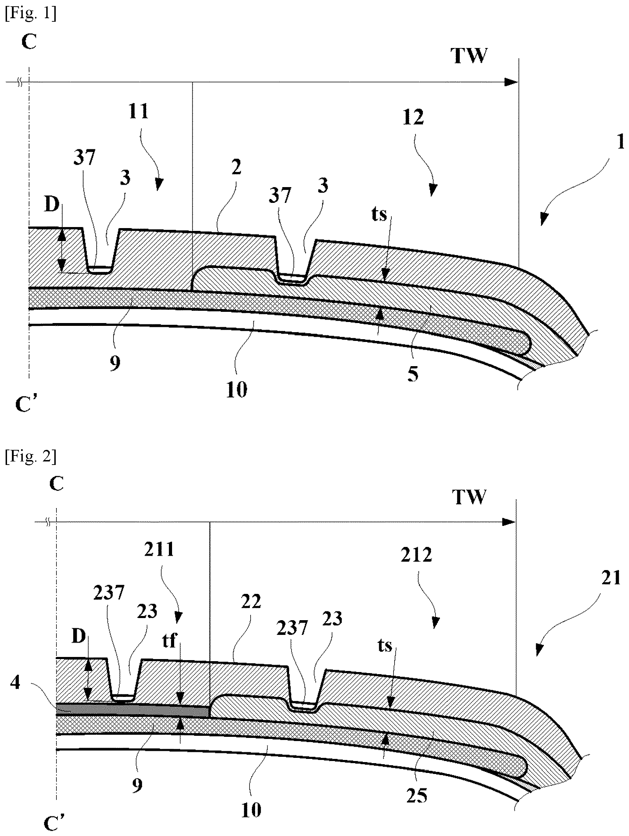

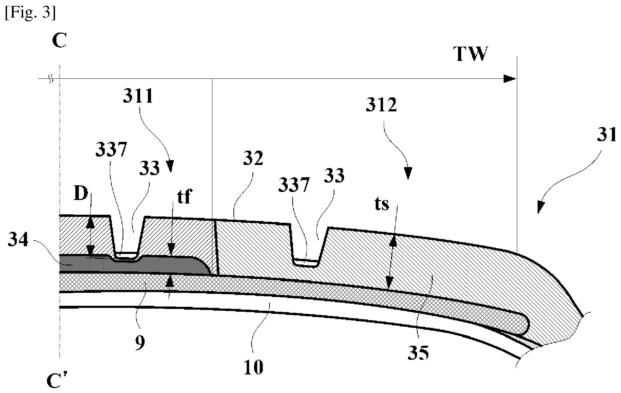

   Fig. 1 is a schematic cross sectional view of a tread according to a first embodiment of the present invention;
[Fig. 2]
   Fig. 2 is a schematic cross sectional view of a tread according to a second embodiment of the present invention;

### [Description of Embodiments]

Preferred embodiments of the present invention will be described below referring to the drawings.

A tread 1 for a tire according to a first embodiment of the present invention will be described referring to Fig. 1.

Fig. 1 is a schematic cross sectional view of a tread according to a first embodiment of the present invention. The tread 1 shown in the figure 1 is a half of a portion of the tread divided with respect to a center line C-C' extending in radial orientation.

The tread 1 is a tread for a tire having dimension 235/45R18 and comprises a contact face 2 of a width TW intended to come into contact with the ground during rolling, and at least one groove 3 of a depth D provided with a wear indicating mean 37 and extending generally in circumferential orientation and opening to the contact face 2. The tread 1 comprising a center region 11 containing the center line C-C' and a pair of shoulder regions 12 being positioned on two axial sides of the center region 11. The tread 1 is equally divided into 3 regions, one center region 11 and two shoulder regions 12 with the width TW. As same as typical radial tire construction, a carcass 10 (or a casing), a main body of the tire which may or may not be provided with an inner liner for inhibiting loss or air pressure, and a ply 9 (or a belt), one or more rubber-coated layers of metallic or textile or other material in a form of cable or wire or strings, are provided radially inward of the tread 1.

As shown in Fig. 1, the pair of shoulder regions 12 each comprising a shoulder rubber layer 5 of a thickness ts made of a shoulder rubber composition different from a rubber composition constituting the tread 1. The thickness ts of the shoulder rubber layer 5 should be understood as a mean thickness of the shoulder rubber layer 5 measured perpendicular to the carcass 10 except under the groove 3 and until axially outermost of the ply 9.

As shown in Fig. 1, the shoulder rubber layer 5 is invisible on the contact face 2 when the tread 1 being brand new, and the shoulder rubber layer 5 is provided radially below a level of 50% of the depth D of the at least one groove 3. A shear storage modulus G' of the shoulder rubber composition constituting the shoulder rubber layer 5 measured at 23°C, 10Hz and 10% of strain is less than or equal to 1.0 MPa.

Since the pair of shoulder regions 12 each comprising a shoulder rubber layer, and the shear storage modulus G' of the shoulder rubber composition constituting the shoulder rubber layer 5 measured at 23°C, 10Hz and 10% of strain is less than or equal to 1.0 MPa, the shoulder rubber layer can effectively reduce excitation of the tread 1 during rolling. Therefore it is possible to improve noise performance.

If the shear storage modulus G' of the shoulder rubber composition constituting the shoulder rubber layer 5 measured at 23°C, 10Hz and 10% of strain is more than 1.0 MPa, there is a risk that an improvement on noise performance would be insufficient. By setting the shear storage modulus G' of the shoulder rubber composition constituting the shoulder rubber layer 5 measured at 23°C, 10Hz and 10% of strain less than or equal to 1.0 MPa, the shoulder rubber layer can effectively reduce excitation of the tread 1 during rolling.

This shear storage modulus G' of the shoulder rubber composition constituting the shoulder rubber layer 5 measured at 23°C, 10Hz and 10% of strain is preferably from 0.2 to 1.0 MPa, more preferable from 0.2 to 0.7 MPa.

Since the shoulder rubber layer 5 is comprised in the pair of shoulder regions 12 and not the center region 11, degradation on handling performance is limited as the center region 11 has a dominant impact on handling performance due to longer contact length compared to shoulder regions 12. Therefore it is possible to maintain reasonable level on handling performance.

Since the shoulder rubber layer 5 is invisible on the contact face 2 when the tread 1 being brand new, it is possible to exhibit a good initial performance not only noise and handling but also other performances, as a contact patch is occupied by the rubber composition constituting the tread 1 which is designed to realize balanced performance.

Since the shoulder rubber layer 5 is provided radially below a level of 50% of the depth D of the at least one groove 3, it is possible to keep the good initial performance not only noise and handling but also other performances longer, as the contact patch is continue occupied by the rubber composition constituting the tread 1 which is designed to realize balanced performance at least until middle of wear life.

The center region 11 and the pair of shoulder regions 12 may be provided unevenly or asymmetrically with the width TW of the tread 1, and the pair of shoulder regions 12 may have different width from one another. The width of one shoulder region 12 is preferably less than or equal to one third of the width TW of the tread 1, more preferably from 10 to 25% of the width TW of the tread 1. If the width of one shoulder region 12 is more than one third of the width TW of the tread 1, there is a risk that degradation on handling performance due to shoulder rubber layer 5 becomes unacceptable. If the width of one shoulder region 12 is less than 10% of the width TW of the tread 1, there is a risk that reduction of tread excitation becomes insufficient results insufficient improvement on noise performance.

A tread 21 according to a second embodiment of the present invention will be described referring to Fig. 2. Fig. 2 is a schematic cross sectional view of a tread according to a second embodiment of the present invention. The construction of this second embodiment is similar to that of the first embodiment other than the arrangement shown in Fig. 2, thus description will be made referring to Fig. 2.

As shown in Fig. 2, a tread 21 comprises a contact face 22 of a width TW, and at least one groove 23 of a depth D provided with a wear indicating mean 237. The tread 21 comprising a center region 211 containing the center line C-C' and a pair of shoulder regions 212 being positioned on two axial sides of the center region 211. The center region 211 comprises a center rubber layer 4 of a thickness tf made of a center rubber composition different from both the shoulder rubber composition and the rubber composition constituting the tread 21, and a shear storage modulus G' of the center rubber composition constituting the center rubber layer 4 measured at 23°C, 10Hz and 10% of strain is higher than the shear storage modulus G' of the rubber composition constituting the tread 21. The shoulder region 212 comprises a shoulder rubber layer 25 of a thickness ts made of a shoulder rubber composition different from the rubber composition constituting the tread 21.

As shown in Fig. 2, the center rubber layer 4 is positioned radially inward of the center region 211 and as to be sandwiched by the two shoulder rubber layers 25. The thickness tf of the center rubber layer 4 is thinner than the thickness ts of the shoulder rubber layer 25. The thickness ts of the shoulder rubber layer 25 should be understood as a mean thickness of the shoulder rubber layer 25 measured perpendicular to a carcass 10 except under the groove 23 and until axially outermost of a ply 9. The thickness tf of the center rubber layer 4 should be understood as a mean thickness of the center rubber layer 4 measured perpendicular to the carcass 10 except under the groove 23 and until axially outermost of the center region 211.

As shown in Fig. 2, the center rubber layer 4 is provided radially below a level of a wear indicating mean 237 provided with the groove 23. A shear storage modulus G' of the center rubber composition constituting the center rubber layer 4 measured at 23°C, 10Hz and 10% of strain is from 2 to 10 times of the shear storage modulus G' of the rubber composition constituting the tread 21. The shear storage modulus G' of the rubber composition constituting the tread 21 other than the center rubber layer 4 or the shoulder rubber layer 25 measured at 23°C, 10Hz and 10% of strain is less than or equal to 6.0 MPa.

Since the center region 211 comprises a center rubber layer 4 of the thickness tf made of the center rubber composition different from both the shoulder rubber composition and the rubber composition constituting the tread 21, and the shear storage modulus G' of the center rubber composition constituting the center rubber layer 4 measured at 23°C, 10Hz and 10% of strain is higher than the shear storage modulus G' of the rubber composition constituting the tread 21, it is possible to improve handling performance, as the center rubber layer 4 made of the center rubber composition having higher shear storage modulus G' than the shear storage modulus G' of the rubber composition constituting the tread 21 deforms less and the tread 21 in the center region 211 other than the center rubber layer 4 need to deform more at a given slip angle thus generates stronger lateral force.

Since the center rubber layer 4 is positioned radially inward of the center region 211, it is possible to improve handling performance efficiently, as the center rubber layer 4 which has high shear storage modulus is placed closer to a component (the ply 9) of the tire generating dominantly lateral force.

Since the thickness tf of the center rubber layer 4 is thinner than the thickness ts of the shoulder rubber layer 25, it is possible to improve both noise and handling performances simultaneously and efficiently, as thicker shoulder rubber layer thickness ensures reduction of tread excitation, and thinner center rubber layer thickness ensures generation of higher lateral force.

If the thickness tf of the center rubber layer 4 is thicker than the thickness ts of the shoulder rubber layer 25, there is a risk that reduction of tread excitation by the shoulder rubber layer 25 becomes insufficient due to relatively smaller volume of the shoulder rubber layer 25 compare with the center rubber layer 4, thus improvement on noise performance becomes insufficient. By setting the thickness tf of the center rubber layer 4 thinner than the thickness ts of the shoulder rubber layer 25, it is possible to improve both noise and handling performance simultaneously and efficiently.

Since the center rubber layer 4 is provided radially below a level of the wear indicating mean 237, it is possible to improve handling performance.

If the center rubber layer 4 is provided radially above the level of the wear indicating mean 237, there is a risk that improvement on handling performance becomes insufficient, as too much volume of the center rubber layer 4 may make flattening of the tire difficult which leads contact patch length shorter resulting generating less lateral force. By setting the center rubber layer 4 provided radially below the level of the wear indicating mean 237, it is possible to improve handling performance.

Since the shear storage modulus G' of the center rubber composition constituting the center rubber layer 4 measured at 23°C, 10Hz and 10% of strain is from 2 to 10 times of the shear storage modulus G' of the rubber composition constituting the tread 21, it is possible to improve handling performance.

If the shear storage modulus G' of the center rubber composition constituting the center rubber layer 4 measured at 23°C, 10Hz and 10% of strain is less than 2 times of the shear storage modulus G' of the rubber composition constituting the tread 21, there is a risk that improvement on handling performance becomes insufficient due to relatively insufficient modulus of the center rubber composition. If the shear storage modulus G' of the center rubber composition constituting the center rubber layer 4 measured at 23°C, 10Hz and 10% of strain is more than 10 times of the shear storage modulus G' of the rubber composition constituting the tread 21, there is a risk that improvement on handling performance becomes insufficient either as too hard center rubber composition may make flattening of the tire difficult which leads contact patch length shorter resulting generating less lateral force. By setting the shear storage modulus G' of the center rubber composition constituting the center rubber layer 4 measured at 23°C, 10Hz and 10% of strain from 2 to 10 times of the shear storage modulus G' of the rubber composition constituting the tread 21, it is possible to improve handling performance.

Since the shear storage modulus G' of the rubber composition constituting the tread 21 other than the center rubber layer 4 or the shoulder rubber layer 25 measured at 23°C, 10Hz and 10% of strain is less than or equal to 6.0 MPa, it is possible to improve noise performance while improving or at least maintaining reasonable level on handling performance.

If the shear storage modulus G' of the rubber composition constituting the tread 21 other than the center rubber layer 4 or the shoulder rubber layer 25 is more than 6.0 MPa, there is a risk that improvement on noise performance becomes insufficient, as the tread 21 itself becomes too hard even provided with the shoulder rubber layer 25. By setting the shear storage modulus G' of the rubber composition constituting the tread 21 other than the center rubber layer 4 or the shoulder rubber layer 25 measured at 23°C, 10Hz and 10% of strain less than or equal to 6.0 MPa, it is possible to improve noise performance while improving or at least maintaining reasonable level on handling performance.

The shear storage modulus G' of the rubber composition constituting the tread 21 other than the center rubber layer 4 or the shoulder rubber layer 25 is preferably less than or equal to 4.0 MPa, more preferably less than or equal to 3.0 MPa.

The center rubber layer 4 and the shoulder rubber layer 25 may or may not be contact each other.

### [Examples]

In order to confirm the effect of the present invention, three types of tire of Examples to which the present invention is applied and other type of tire of Reference and Comparative Example were prepared.

The Example 1 was a tire provided with a tread as described in the above first embodiment; a width of one shoulder region was 25% of a width of the tread TW, a shear storage modulus G' of a shoulder rubber composition was 0.3 MPa, a shear storage modulus G' of a rubber composition constituting the tread other than a shoulder rubber layer was 2.7 MPa. The Example 2 was a tire provided with a tread as described in the above second embodiment; a width of one shoulder region was also 25% of a width of the tread TW, a shear storage modulus G' of a shoulder rubber composition was 0.3 MPa, a shear storage modulus G' of a center rubber composition was 12.2 MPa, a shear storage modulus G' of the tread other than a shoulder rubber layer or a center rubber layer was 2.7 MPa. The Reference was a tire provided with a tread without shoulder rubber layer nor center rubber layer. The Comparative Example was a tire provided with a tread similar to the Example 1; a shear storage modulus G' of a shoulder rubber composition was 1.5 MPa

### Noise performance test:

Unused test tires were mounted onto all four wheels of a 2,500 cc rear-wheel drive vehicle. On a straight path weathered asphalt, the vehicle was driven at a constant speed of 80 kph. An interior noise was measured using a microphone positioned at a passenger's ear close to window. An A-weighted sound pressure level between 0 and 500 Hz was calculated.

The results are shown in table 1. In this table 1, results are represented by difference in dB(A) against Reference, lower the value indicates better the performance.

### Handling test:

A cornering power of unused test tires mounted onto a standard rim and inflated to nominal internal pressure was measured using a flat belt tire tester. A load of 460kg was applied while tires driven at a constant speed of 80 kph, lateral force at a slip angle ±1° was measured, and the lateral forces measured at +1° and at -1° in absolute value were averaged.

The results are also shown in table 1. In this table 1, results are represented by an index of 100 for Reference, higher the number indicates better the performance. Within 10 points difference on this comparison could be considered as acceptable.

**[Table 1]**

| | Example 1 | Example 2 | Comparative Example | Reference |
|---|---|---|---|---|
| G' of shoulder rubber composition (MPa) | 0.3 | 0.3 | 1.5 | - |
| G' of center rubber composition (MPa) | - | 12.2 | - | - |
| Noise performance (dBA) | -0.9 | -0.8 | -0.1 | 0.0 |
| Handling performance (index) | 93 | 102 | 98 | 100 |

As seen from table 1, the Examples show improvement on noise performance while improving or maintaining reasonable level on handling performance, which cannot be achieved by treads disclosed in prior arts.

### [Reference Signs List]

1, 21 tread
11, 211 center region
12, 212 (pair of) shoulder region
2, 22 contact face
3, 23 groove
37, 237 wear indicating mean
4 center rubber layer
5, 25 shoulder rubber layer
9 ply
10 carcass

## Claims

1. A tread (1) for a tire having a contact face (2) of a width (TW) intended to come into contact with ground during rolling, the tread (1) being provided with at least one groove (3) of a depth (D) provided with a wear indicating mean (37) and extending generally in circumferential orientation and opening to the contact face (2), the tread (1) comprising a center region (11) and a pair of shoulder regions (12) being positioned on two axial sides of the center region (11),
the pair of shoulder regions (12) each comprising a shoulder rubber layer (5) of a thickness (ts) made of a shoulder rubber composition different from a rubber composition constituting the tread (1), a shear storage modulus G' of the rubber composition constituting the tread (1) measured at 23°C, 10Hz and 10% of strain being different from a shear storage modulus G' of the shoulder rubber composition constituting the shoulder rubber layer (5) measured at 23°C, 10Hz and 10% of strain,
the tread being **characterized in that** the shear storage modulus G' of the shoulder rubber composition constituting the shoulder rubber layer (5) measured at 23°C, 10Hz and 10% of strain is less than or equal to 1.0 MPa.

2. The tread (1) according to Claim 1, **wherein** the shoulder rubber layer (5) is invisible on the contact face (2) when the tread (1) being brand new.

3. The tread (1) according to Claim 2, **wherein** the shoulder rubber layer (5) is provided radially below a level of 50% of the depth (D) of the at least one groove (3).

4. The tread (1) according to any one of the Claims 1 to 3, **wherein** the center region (11) comprises a center rubber layer (4) of a thickness (tf) made of a center rubber composition different from both the shoulder rubber composition and the rubber composition constituting the tread, and **wherein** a shear storage modulus G' of the center rubber composition constituting the center rubber layer (4) measured at 23°C, 10Hz and 10% of strain is higher than the shear storage modulus G' of the rubber composition constituting the tread (1) measured at 23°C, 10Hz and 10% of strain.

5. The tread (1) according to Claim 4, **wherein** the center rubber layer is positioned radially inward of the center region (11).

6. The tread (1) according to Claim 4 or Claim 5, **wherein** the thickness (tf) of the center rubber layer (4) is thinner than the thickness ts of the shoulder rubber layer (5).

7. The tread (1) according to any one of the Claims 4 to 6, **wherein** the center rubber layer (4) is provided radially below a level of the wear indicating mean (37).

8. The tread (1) according to any one of the Claims 4 to 7, **wherein** the shear storage modulus G' of the center rubber composition constituting the center rubber layer (4) measured at 23°C, 10Hz and 10% of strain is from 2 to 10 times of the shear storage modulus G' of the rubber composition constituting the tread (1) measured at 23°C, 10Hz and 10% of strain.

9. The tread (1) according to any one of the Claims 4 to 8, **wherein** the shear storage modulus G' of the rubber composition constituting the tread (1) other than the center rubber layer (4) or the shoulder rubber layer (5) measured at 23°C, 10Hz and 10% of strain is less than or equal to 6.0 MPa.

10. A tire having a tread according to any one of the Claims 1 to 9.

## Patentansprüche

1. Lauffläche (1) für einen Reifen, die eine Kontaktseite (2) mit einer Breite (TW) aufweist, die während des Rollens mit Boden in Kontakt kommen soll, wobei die Lauffläche (1) mit wenigstens einer Rille (3) mit einer Tiefe (D) versehen ist, die mit einem abnutzungsanzeigenden Mittel (37) versehen ist und allgemein in Umfangsrichtung verläuft und sich zu der Kontaktseite (2) öffnet, wobei die Lauffläche (1) einen mittleren Bereich (11) und ein Paar von Schulterbereichen (12), die an zwei axialen Seiten des mittleren Bereichs (11) angeordnet sind, umfasst,
wobei das Paar von Schulterbereichen (12) jeweils eine Schulter-Kautschukschicht (5) mit einer Dicke (ts) umfasst, die aus einer Schulter-Kautschukzusammensetzung hergestellt ist, die von einer Kautschukzusammensetzung der Lauffläche (1) verschieden ist, wobei ein Scher-Speichermodul G' der Kautschukzusammensetzung, die die Lauffläche (1) bildet, gemessen bei 23 °C, 10 Hz und 10 % Verformung, von dem Scher-Speichermodul G' der Schulter-Kautschukzusammensetzung, die die Schulter-Kautschukschicht (5) bildet, gemessen bei 23 °C, 10 Hz und 10 % Verformung, verschieden ist,
wobei die Lauffläche **dadurch gekennzeichnet ist, dass** der Scher-Speichermodul G' der Schulter-Kautschukzusammensetzung, die die Schulter-Kautschukschicht (5) bildet, gemessen bei 23 °C, 10 Hz und 10 % Verformung, kleiner als oder gleich 1,0 MPa ist.

2. Lauffläche (1) gemäß Anspruch 1, **wobei** die Schulter-Kautschukschicht (5) an der Kontaktseite (2) nicht sichtbar ist, wenn die Lauffläche (1) fabrikneu ist.

3. Lauffläche (1) gemäß Anspruch 2, **wobei** die Schulter-Kautschukschicht (5) radial unterhalb eines Niveaus von 50 % der Tiefe (D) der wenigstens einen Rille (3) bereitgestellt ist.

4. Lauffläche (1) gemäß einem der Ansprüche 1 bis 3, **wobei** der mittlere Bereich (11) eine mittlere Kautschukschicht (4) mit einer Dicke (tf) umfasst, der aus einer mittleren Kautschukzusammensetzung hergestellt ist, die sowohl von der Schulter-Kautschukzusammensetzung als auch der Kautschukzusammensetzung, die die Lauffläche bildet, verschieden ist, und **wobei** ein Scher-Speichermodul G' der mittleren Kautschukzusammensetzung, die die mittlere Kautschukschicht (4) bildet, gemessen bei 23 °C, 10 Hz und 10 % Verformung, höher ist als der Scher-Speichermodul G' der Kautschukzusammensetzung, die die Lauffläche (1) bildet, gemessen bei 23 °C, 10 Hz und 10 % Verformung.

5. Lauffläche (1) gemäß Anspruch 4, **wobei** die mittlere Kautschukschicht radial innen an dem mittleren Bereich (11) angeordnet ist.

6. Lauffläche (1) gemäß Anspruch 4 oder Anspruch 5, **wobei** die Dicke (tf) der mittleren Kautschukschicht (4) kleiner als die Dicke der Schulter-Kautschukschicht (5) ist.

7. Lauffläche (1) gemäß einem der Ansprüche 4 bis 6, **wobei** die mittlere Kautschukschicht (4) radial unterhalb eines Niveaus des verschleißanzeigenden Mittels (37) angeordnet ist.

8. Lauffläche (1) gemäß einem der Ansprüche 4 bis 7, **wobei** der Scher-Speichermodul G' der mittleren Kautschukzusammensetzung, die die mittlere Kautschukschicht (4) bildet, gemessen bei 23 °C, 10 Hz und 10 % Verformung, von 2 bis 10-mal dem Scher-Speichermodul G' der Kautschukzusammensetzung, die die Lauffläche (1) bildet, gemessen bei 23 °C, 10 Hz und 10 % Verformung, beträgt.

9. Lauffläche (1) gemäß einem der Ansprüche 4 bis 8, **wobei** der Scher-Speichermodul G' der Kautschukzusammensetzung, die die Lauffläche (1) bildet, verschieden von der mittleren Kautschukschicht (4) und der Schulter-Kautschukschicht (5), gemessen bei 23 °C, 10 Hz und 10 % Verformung, kleiner als oder gleich 6,0 MPa ist.

10. Reifen mit einer Lauffläche gemäß einem der Ansprüche 1 bis 9.

## Revendications

1. Bande de roulement (1) pour un pneu ayant une face de contact (2) d'une largeur (TW) destinée à venir en contact avec le sol pendant le roulement, la bande de roulement (1) étant pourvue d'au moins une rainure (3) d'une profondeur (D) pourvue d'un moyen d'indication d'usure (37) et s'étendant généralement dans une orientation circonférentielle et s'ouvrant vers la face de contact (2), la bande de roulement (1) comprenant une région centrale (11) et une paire de régions d'épaulement (12) positionnées sur deux côtés axiaux de la région centrale (11),
les régions de la paire de régions d'épaulement (12) comprenant chacune une couche de caoutchouc d'épaulement (5) d'une épaisseur (ts) constituée d'une composition de caoutchouc d'épaulement différente d'une composition de caoutchouc constituant la bande de roulement (1), un module de conservation en cisaillement G' de la composition de caoutchouc constituant la bande de roulement (1) mesuré à 23 °C, 10 Hz et 10 % de déformation étant différent d'un module de conservation en cisaillement G' de la composition de caoutchouc d'épaulement constituant la couche de caoutchouc d'épaulement (5) mesuré à 23 °C, 10 Hz et 10 % de déformation,
la bande de roulement étant **caractérisée en ce que** le module de conservation en cisaillement G' de la composition de caoutchouc d'épaulement constituant la couche de caoutchouc d'épaulement (5) mesuré à 23 °C, 10 Hz et 10 % de déformation est inférieur ou égal à 1,0 MPa.

2. Bande de roulement (1) selon la revendication 1, **dans laquelle** la couche de caoutchouc d'épaulement (5) est invisible sur la face de contact (2) quand la bande de roulement (1) est toute neuve.

3. Bande de roulement (1) selon la revendication 2, **dans laquelle** la couche de caoutchouc d'épaulement (5) est disposée radialement en dessous d'un niveau de 50 % de la profondeur (D) de l'au moins une rainure (3).

4. Bande de roulement (1) selon l'une quelconque des revendications 1 à 3, **dans laquelle** la région centrale (11) comprend une couche de caoutchouc centrale (4) d'une épaisseur (tf) constituée d'une composition de caoutchouc centrale différente à la fois de la composition de caoutchouc d'épaulement et de la composition de caoutchouc constituant la bande de roulement, et **dans laquelle** un module de conservation en cisaillement G' de la composition de caoutchouc centrale constituant la couche de caoutchouc centrale (4) mesuré à 23 °C, 10 Hz et 10 % de déformation est supérieur au module de conservation en cisaillement G' de la composition de caoutchouc constituant la bande de roulement (1) mesuré à 23 °C, 10 Hz et 10 % de déformation.

5. Bande de roulement (1) selon la revendication 4, **dans laquelle** la couche de caoutchouc centrale est positionnée radialement à l'intérieur de la région centrale (11).

6. Bande de roulement (1) selon la revendication 4 ou la revendication 5, **dans laquelle** l'épaisseur (tf) de la couche de caoutchouc centrale (4) est plus mince que l'épaisseur ts de la couche de caoutchouc d'épaulement (5) .

7. Bande de roulement (1) selon l'une quelconque des revendications 4 à 6, **dans laquelle** la couche de caoutchouc centrale (4) est disposée radialement en dessous d'un niveau du moyen d'indication d'usure (37).

8. Bande de roulement (1) selon l'une quelconque des revendications 4 à 7, **dans laquelle** le module de conservation en cisaillement G' de la composition de caoutchouc centrale constituant la couche de caoutchouc centrale (4) mesuré à 23 °C, 10 Hz et 10 % de déformation représente de 2 à 10 fois le module de conservation en cisaillement G' de la composition de caoutchouc constituant la bande de roulement (1) mesuré à 23 °C, 10 Hz et 10 % de déformation.

9. Bande de roulement (1) selon l'une quelconque des revendications 4 à 8, **dans laquelle** le module de conservation en cisaillement G' de la composition de caoutchouc constituant la bande de roulement (1) à part la couche de caoutchouc centrale (4) ou la couche de caoutchouc d'épaulement (5) mesuré à 23 °C, 10 Hz et 10 % de déformation est inférieur ou égal à 6,0 MPa.

10. Pneu ayant une bande de roulement selon l'une quelconque des revendications 1 à 9.
